# EUROPEAN PATENT APPLICATION

(11) **EP 0 854 650 A2**
(43) Date of publication of application: **22.07.1998**
(21) Application number: 97119962.5
(22) Date of filing: 14.11.1997
(51) Int. Cl.: H04N 7/24

(54) **Method for addressing a service in digital video broadcasting**

(30) Priority: 17.01.1997 FI 970186
(71) Applicant: NOKIA TECHNOLOGY GmbH, 75175 Pforzheim (DE)
(72) Inventor: Djupsjöbacka, Kimmo, 33340 Tampere (FI); Toiva, Pasi, 33240 Tampere (FI); Löytänä, Kimmo, 33720 Tampere (FI); Vuori, Seppo, 33210 Tampere (FI)

(57) **Abstract**

Method for addressing at least one service in a data communication system comprises at least one data transmission network (6, 12a, 12b, 15a, 15b, 16, 17) for transmitting information in at least one preferably MPEG data transmission stream (TS). In the method one or several service_providers transmits services to one or several data transmission networks (6, 12a, 12b, 15a, 15b, 16, 17). The service is assigned an identification (original_ network_id, transport_stream_id, service_id), wherein on basis of the identification (original_network_id, transport_stream_id, service_id), it is possible to retrieve the data transmission stream (TS) to be used and the location in the data transmission stream (TS). The service is assigned an identifying name (service_provider_name, service_name) and a relation between the name information and the identification data, wherein on the basis of the name information (service_provider_name, service_name) and the relation, it is possible to retrieve the service identification.

## Description

The present invention relates to methods presented in the preambles of claims 1 and 2 for addressing a service to be transmitted via a digital video broadcast. The invention relates further to data communication systems according to the preambles of claims 10 and 11, broadcasting devices according to the preambles of claims 12 and 13, and receiving apparatuses according to the preambles of claims 14 and 15.

A service refers in this specification to the packet of service components, such as television programs, video programs, radio programs, data files etc. to be transmitted in one data transmission stream. A service component indicates in this context also parts contained in one service component, such as video, audio and data signals, or events, such as different episodes of a television program. The services can be transmitted advantageously in digital form from the sender to the receiver.

For transmission of digital video, audio and data signals, it is possible to use either ground-based broadcasting in the air via an antenna, a satellite connection, a cable television network, a telephone or telecommunication network, or a light cable network, through which digital information is transmitted to a large number of receivers. An advantage of the transmission of digital signals to analog transmission is the fact that the same transmission channel can be used for transferring signals of several different services. This can be implemented *inter alia* so that the signals are divided by a method known as such into packets which are sent to the transmission channel. Packets formed of different services are transmitted at intervals, wherein a packet advantageously contains a title field bearing information on which service the packet in question belongs to, and a data field carrying the actual information to be transmitted.

Before analog signals can be transmitted in packet form, the analog signals must first be converted at the sending end to digital form, wherein the digital signal formed can be arranged into packets to be sent via the transmission channel. At the receiving end, the analog signals converted into digital signals are converted back to analog form.

A significant application of transmission of a digital signal in packet form is the digital television system, in which several programs are transmitted simultaneously in one transmission channel. Thus the transmission channel conveys packets containing video, audio and data information of different programs at intervals. An example is the MPEG-2 (Motion Picture Experts Group) (ISO/IEC 13818), which defines a generic standard for information packeting as well as a video and audio compression method, which makes it possible to broadcast a television image with fewer bits than by direct digitizing of the television image to bits.

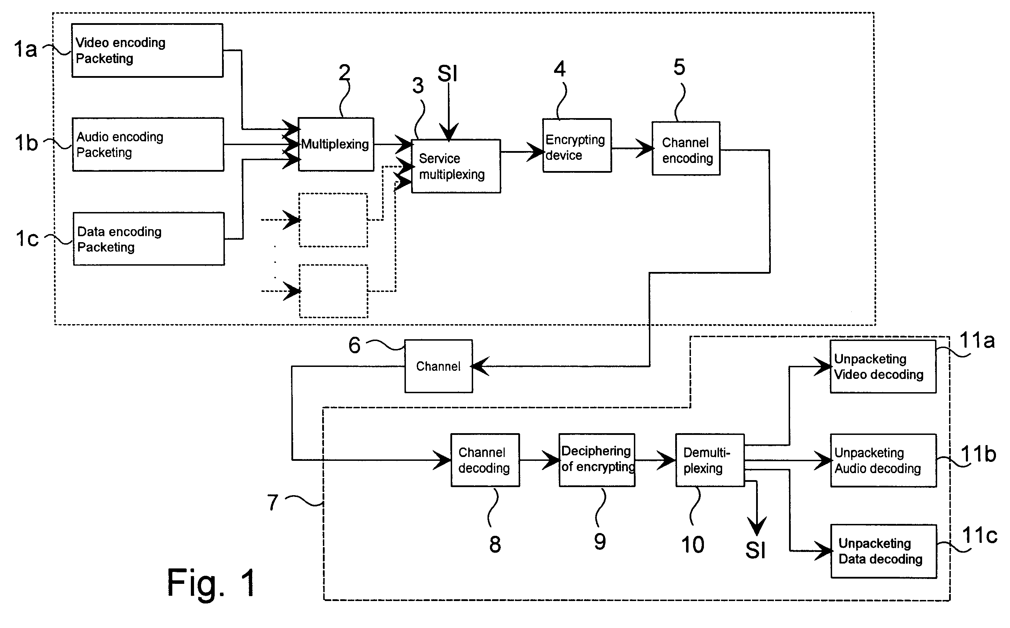

Figure 1 shows a data communication system in which video, audio and data signals formed of different services are transmitted in the channel to the receiving apparatus. At the sending end, different information types, such as video, audio and data, are preferably formed into packets which are compiled into services, for example with a multiplexer 2. Figure 1 shows the equipment 1a, 1b, 1c, 2 for forming the packet stream of only one service but at the sending end, several different services can be combined in the same data transmission stream. The system of Fig. 1 comprises a service multiplexer 3 for compiling the packets of different services advantageously to a data transmission stream in packet form to be transmitted further. In the advantageous embodiment shown in Fig. 1, the service multiplexer 3 comprises further means for adding to the data transmission stream information on the service, such as service information SI. Also, it is possible at the transmission to encrypt all or some packets in an encryption device 4, after which the data transmission stream is channel coded with a channel coder 5. The channel coder 5 converts the data transmission stream into a signal suitable for the data transmission channel used at the time, as is known. The data transmission channel 6 is for example a satellite connection, a cable connection, or a ground-based link connection.

At the receiving end, the reverse operations are conducted in relation to the sending, i.e. channel decoding, deciphering, separation of service information SI, and service demultiplexing, wherein the packets belonging to the service to be received at a time are separated from the data transmission stream as a separate signal, and from the signal of the service to be received, the video packets, audio packets and data packets are separated from each other.

For watching digital video signals, receiving apparatuses have been developed which are so-called set-top-box devices (STB). In these STB devices, the received digital video signal is demodulated, possible error correction is conducted for eliminating possible interferences with the signal in the transmission channel, a selection is made from the packet stream to select the packets which belong to the service intended to receive, and possible encryption is deciphered, provided that the viewer has the right to decipher the encryption. After this, the deciphered signal is decoded, i.e. the operation is reverse to the coding of the signal upon transmission, for example coding with the MPEG-2 algorithm. Decoding is conducted both on audio and video signals, wherein the decoder advantageously forms both an audio and a video signal. At this stage, the decoded signals are still in digital form, the audio signal is directed further to the digital/analog converter and the video signal is directed for example to a PAL converter or an NTSC converter depending on which system was used for transmission of color information of the video image. The above-mentioned PAL and NTSC color systems are the most commonly used, but also other color coding systems are known. The block diagram of Fig. 1 is a reduced illustration on the functional blocks of an STB device 7: channel decoder 8, encryption deciphering means 9, and service demultiplexer 10 in which service information is separated from the services and services related to different programs are conveyed as separate signals into the service unpacketing means 11a, 11b, 11c for forming the video, audio and data signals corresponding to the transmitted signals. Further, the STB device can comprise means for storing service information.

The audio and video signals formed by the STB device are first directed e.g. to a conventional television set, advantageously to the video or SCART connection of the television set, wherein the received information can be viewed on the television screen.

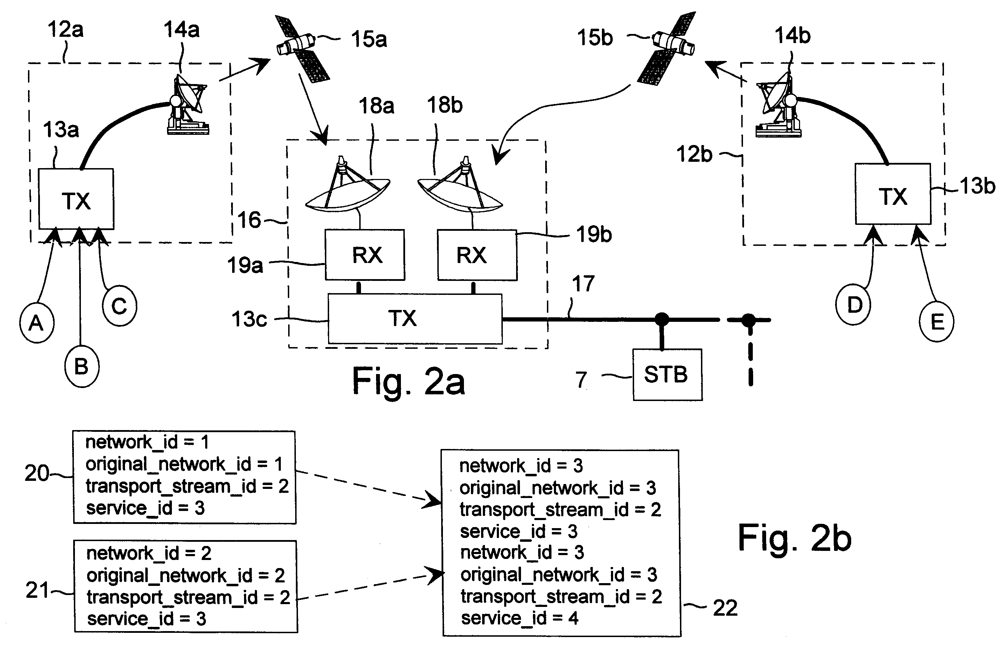

At the sending end of digital television systems, transmitting servers form digital packets of several programs to be broadcast, which are conveyed to the transmission channel, for example a satellite 15a, 15b (Fig. 2a). The services to be transmitted can include commercial videos, music videos, movies, sports events, current affairs programs, and news. The STB device is capable of selecting from the incoming data transmission stream the service that the viewer wishes to watch. Thus the viewer must give the device an identification of the service in question, or the STB device can make a list of the identifications of the services which can be received with the data transmission stream, for example in the signal transmitted in a cable television network 17.

Also systems have been developed for transmitting data files with a digital video signal in the data transmission stream TS. The data files are for example information that is accessible via the Internet data transmission network, the form being for example hyper text markup language (HTML) type.

Data systems developed for transmission of digital video signals can comprise several providers of program services who are located geographically even very far from each other and transmit signals of different services to the data communication system. One data communication system has been defined by the Digital Video Broadcasting (DVB) organization. For separating different services and service providers from each other, this system comprises a naming system in which each data transmission network has an identification code, each data transmission stream within said data transmission network has an identification code, and further the different services transmitted in the data transmission stream each have an identification code. Thus it is not possible for two different services to have a fully identical code. This naming systems is presented in the ETSI standard ETS 300 468.

Thanks to the increased use of open data systems, the Transmission Control Protocol/Internet Protocol (TCP/IP) has become a general protocol which computers of different sizes and brands can use for communication. The TCP/IP support is presently available for almost all operating systems. The TCP/IP has a network layer protocol IP (Internet Protocol) intended for routing by gateways or routers. The routing is conducted with the help of IP addresses and routing tables. Thanks to the Internet protocol, computers using the TCP/IP can transmit messages in the router network as far as to the other side of the globe.

The Internet, which covers well particularly the industrialized countries, is a huge router network using the TCP/IP connection protocol. The largest group of users of the Internet, which was started for scientific use only, now consists of companies which buy their services from commercial connection providers. In the Internet, each computer has its own IP address for identification, for example 123.1.1.10.

In addition to the numerical address presented above, each computer connected with the Internet data transmission network has also an identification name, such as computer.company.fi, which is stored in a name server together with the numerical address. Thus the name server is capable of using the name to find out the actual computer address used by the data transmission network. It is usually easier to remember a name than a numerical string, so the use of a name in the address has become popular. Further, it is usually possible to maintain the name also in a situation where the numerical address is changed, for example when the operator of the data transmission network reconfigures the data transmission network.

Some different methods have been developed for addressing a certain service in the Internet data transmission network. One known method is to use addresses complying to the so-called URL addressing mechanism. A typical URL address has the form:
http://www.server.network/directory_name/.../file_name.
In the STB device, however, this requires that a TCP/IP stack be formed in the software of the STB device. This method is applicable particularly in situations when the data file is retrieved from the Internet data transmission network and transmitted to the STB device of the viewer for example in a MPEG data transmission stream. The method presented in this application extends the use of this address mechanism to also services contained in the MPEG data transmission stream.

Digital storage media command and control (DSM-CC) protocols will be used in several STB devices supporting interactive digital video broadcasting applications. Thus it is advantageous to apply a user-to-user type address form for selecting the desired program and interactive services from the service supply of program servers. This is similar to the address form used in the Internet data transmission network, because also program servers use a hierarchic naming protocol and the program servers are advantageously assigned an individual name.

In data transmission streams TS of digital video signals complying to the DVB definitions, each service is advantageously indicated with three identification numbers: original_network_id, transport_stream_id, and service_id. This gives the address form:
dvb://original_network_id.transport_stream_id.service_id, which can be further extended hierarchically to the components in said service for example by using the DSM-CC object carousel and adding the necessary information to the above-mentioned address.

Addressing methods of prior art have *inter alia* the disadvantage that when the address of a device connected with the data transmission network is changed, the old address can no longer be used but the new address must be known. A change of address may be necessary for example when the structure of the data transmission network is changed. The address can also be changed in a situation, when e.g. the operator of a cable network receives data transmission streams transmitted via a satellite and sends them further into the cable network, wherein the identifications of the services to be transmitted in the data transmission stream are changed, as shown in Figs. 2a and 2b. Furthermore, a numerical address is difficult to remember. Moreover, a numerical address does not easily reveal what type of service is in question.

One aim of the present invention is to provide a method for addressing a service to be transmitted in a digital video broadcasting, with which it is possible to locate the data transmission stream used for transmitting the information contained in the service. The invention is based on the idea that the data transmission stream carries the name identifying the service and that a relation is formed between the name and the identification, on the basis of which the identification corresponding to the name and thus the physical data transmission stream can be retrieved. The first advantageous embodiment of the method according to the present invention is characterized in what will be presented in the characterizing part of the appended claim 1. The first advantageous embodiment of the system according to the present invention is characterized in what will be presented in the characterizing part of the appended claim 10. The first advantageous embodiment of the transmitter according to the present invention is characterized in what will be presented in the characterizing part of the appended claim 12. Finally, the first advantageous embodiment of the receiver according to the present invention is characterized in what will be presented in the characterizing part of the appended claim 14.

The second advantageous embodiment of the method according to the present invention is characterized in what will be presented in the characterizing part of the appended claim 2.

The second advantageous embodiment of the system according to the present invention is characterized in what will he presented in the characterizing part of the appended claim 11.

The second advantageous embodiment of the transmitter according to the present invention is characterized in what will be presented in the characterizing part of the appended claim 13.

The second advantageous embodiment of the receiver according to the present invention is characterized in what will be presented in the characterizing part of the appended claim 15.

The invention gives considerable advantages to the solutions of prior art. The user does not need to know the physical address of the service, but the service can be identified on the basis of an individual name which is remembered more easily. The address of the service can also be changed when necessary and the name can still be maintained, wherein the users do not necessarily even need to know about the change of addresses. This makes it possible to make direct references from one service to other services.

The invention will be described more closely in the following description with reference to the appended drawings. In the drawings,
- Fig. 1: is a reduced block diagram showing a system for transferring digital video signals according to prior art,
- Fig. 2a: is a chart showing the principle of a data communication system used as an example,
- Fig. 2b: illustrates the change of service identification data in connection with a relayed transmission,
- Figs. 3a-d: illustrate the general organization of service information SI and its table hierarchy,
- Fig. 4: shows an example of a SDT table in a reduced manner
- Fig. 5: is a reduced chart illustrating the method according to an advantageous embodiment of the invention,
- Fig. 6: is a reduced chart illustrating the application of the method according to an advantageous embodiment of the invention in retrieving the address of a service, and
- Fig. 7: is a reduced chart illustrating another data communication system according to the advantageous embodiment of the invention.

The appended Fig. 2a shows a data communication system in which the present invention can be advantageously applied. Program service providers A, B, C, D, E each send their services to the broadcasting station 12a, 12b of a provider of program transmission services, which comprises *inter alia* a service transmitter 13a, 13b and means 14a, 14b for sending the data transmission stream to the transmission channel. The service transmitters 13a, 13b form packets of each service to be transmitted which are multiplexed advantageously to one data transmission stream (TS). The data transmission stream is transmitted from a transmitting antenna 14a, 14b for example to a satellite 15a, 15b. The satellite 15a, 15b transfers the data transmission stream to a ground station 16 which is e.g. a satellite antenna 18a, 18b and a satellite receiver 19a, 19b of the operator of a cable television network 17. Services contained in data transmission streams received at the ground station 16 can be combined in a new way to data transmission streams which are transmitted to the cable television network 17 by using a third service transmitter 13c. To the cable television network 17, it is possible to connect STB devices 7 of viewers for picking out a service for receiving, such as a television program, from the data transmission stream TS. The ground station 16 can comprise several satellite antennas 18a, 18b and satellite receivers 19a, 19b, each being adjusted to receive data transmission streams transmitted via a certain satellite 15a, 15b. The satellites 15a, 15b can belong to the same transmission server, or they can be satellites of different transmission servers 13a, 13b.

Figure 2b shows an example of changing service identification data in connection with relayed transmission. The identification data of a service to be transmitted via a first satellite 15a are shown in block 20. In a corresponding manner, in Fig. 2a the identification data of a service to be transmitted via a second satellite 15a are shown in block 21. Both signals are received at the ground station 16 and transmitted further to the cable television network 17. Thus the service identification data, which in this application example is transmitted together with the service information SI, is converted to comply for example with block 22.

The data transmission stream TS can comprise packet-coded information packets on one or several services, as presented above in this specification. The information packets are for example services or packets containing information on other data transmission streams transmitted via the service transmitter 13a, 13b, 13c in question, and program services contained in them. Designing the structure of the data transmission stream [appropriately] makes it possible to carry out a large number of different operations on the data transmission stream in a way that does not require a large capacity. The information on the service to be transmitted in the data transmission stream TS, i.e. the program specific information PSI, is arranged in the data transmission stream before the transmission, wherein the decoder of the STB device 7 is capable of separating the transmission packets of the service in question from the data transmission stream and of decoding the transmitted information. If the structure of the data transmission stream is designed to be flexible, it is thus possible to transmit different types of information in the data transmission stream, such as hypertext mark-up language (HTML) pages, news, etc. Interactive applications, such as Internet browsers, should provide access to information in the services by means of general or symbolic addressing methods, such as via the uniform resource locator (URL) link in the WWW service used in Internet networks.

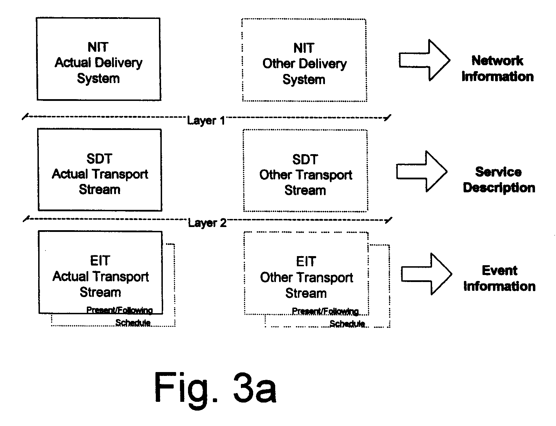

Figure 3a shows a general organization and table hierarchy of service information (DVB SI). The information is given in layers, wherein the first layer presents information on the network, the second layer contains descriptions of services, and the third layer contains information on events. The tables show primarily information which is relevant for applying the present invention and understanding its function. The network can comprise e.g. the transmitting servers 13a, 13b of a certain provider of program transmitting services.

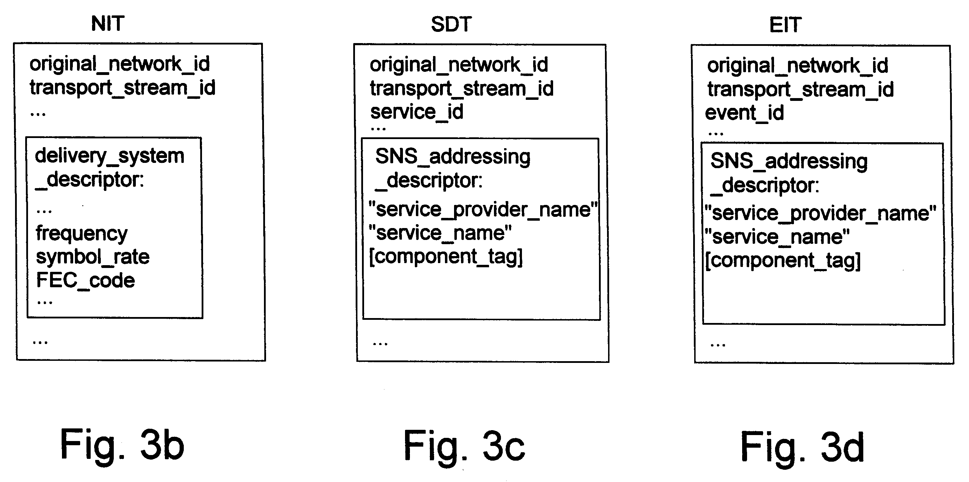

Figure 3b shows an example on the structure of the network information table (NIT) of the first layer. The network information table contains information on the physical arrangement of data transmission channels or data transmission streams in the given network, as well as information on the properties of the network.

Figure 3c shows the structure of a service description table SDT. Service description tables show the services contained in each data transmission stream. Service description tables are network-specific, wherein each network has its own service description table.

Figure 3d shows the structure of an event information table EIT. An event information table shows information related to events contained in each service in chronological order.

In the following embodiments describing the invention, an example is made with the DVB data communication system using MPEG data transmission strings for transmission of digital signals, such as audio, video and data signals. As presented above in this specification, a service can be identified e.g. with a numerical address containing the service identification data. In this example, these are original_network_id, transport_stream_id, and service_id. The original_network_id is individual throughout the whole data communication system, and in the DVB data communication system, the network identifications are maintained and assigned by the ETSI organization. The transport_stream_id is individual within the scope of each network, and the service_id refers to one individual program service to be transmitted in the same data transmission stream. Further, the event_id is defined individually in each program service.

In the records of the service description table, space is reserved for descriptors for each service defined in the record of the SDT table in which information can be transmitted on said service. In a corresponding manner, the records of the event information table EIT contain a space for transmitting information related to the event in question. The DVB protocol determines what types of descriptors can be used in the records of the SDT table and how the providers of program services can add their own private descriptors. Each record of the SDT table can contain several of these descriptors advantageously one after the other. The descriptor fields can be either defined by one and the same service provider or by several different service providers, wherein the fields of the same service provider are preferably placed in succession.

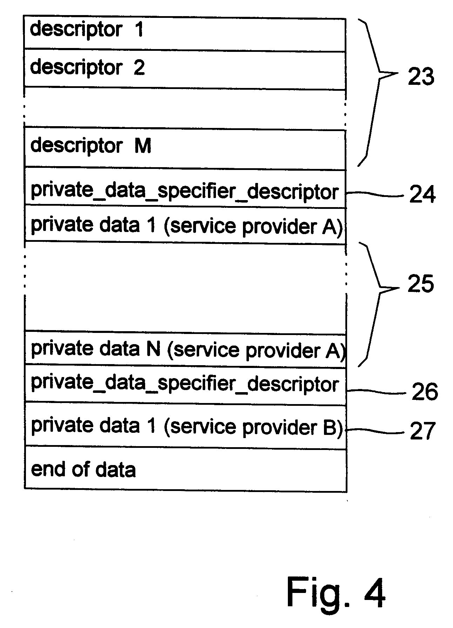

Figure 4 is a chart showing in principle how the private descriptors are placed according to the DVB protocol at the end of the SDT table. The beginning of the SDT table (indicated with reference numeral 23) comprises general descriptors, such as a service_descriptor. Each descriptor comprises a descriptor_tag, on the basis of which the different descriptors are separated from each other. The private descriptors are preceded by a general descriptor 24, whose type identification is the type of the private descriptor (private_data_specifier_descriptor). This is followed by the descriptors 25 defined by one service provider. The descriptors 27 of the next service provider begin, again, with the general descriptor 26 whose type identification is the type of the private descriptor.

The present invention utilizes these private descriptors advantageously in a way that in the space reserved for private descriptors, the program service specific service descriptor is added, containing the name of the service to be used for transmitting the service as well as the name of the provider of the service in question. In this specification, the name of the service and the name of the service provider are jointly indicated with the term name information. If the service contains time-dependent information, a corresponding descriptor is added also to the event information table EIT.

The record to which the descriptor is added is at least a part of the identification data of the service in question, wherein the relation between the name information and the identification data is obvious and the identification data can be found out on the basis of the name information.

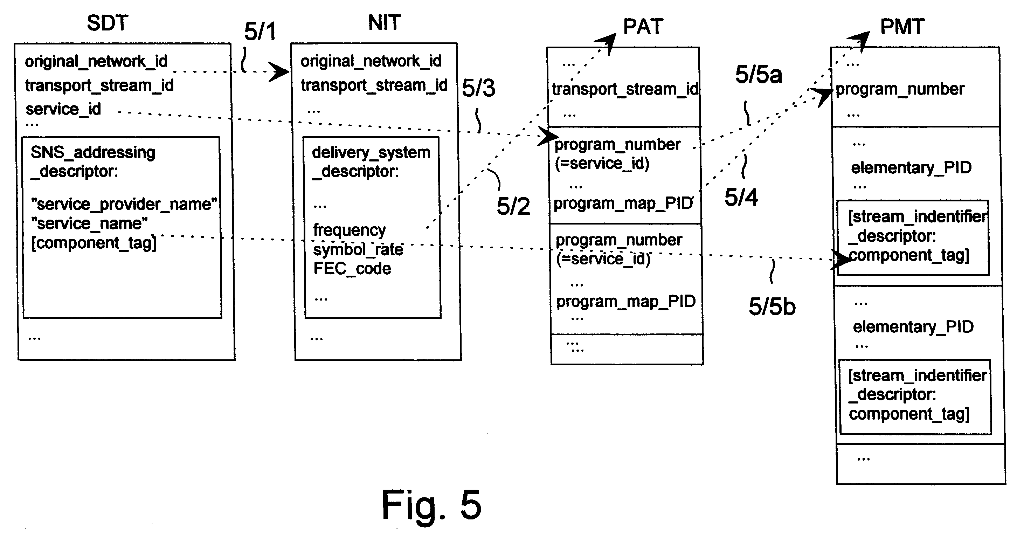

Figure 5 shows an advantageous embodiment in which a field is added to the SDT table containing the name of the service provider and the name of the service. In this specification, the field is indicated with the term SNS_ addressing_descriptor (stream name service). An advantageous definition of the SNS_addressing_descriptor is presented below according to the DVB standard:

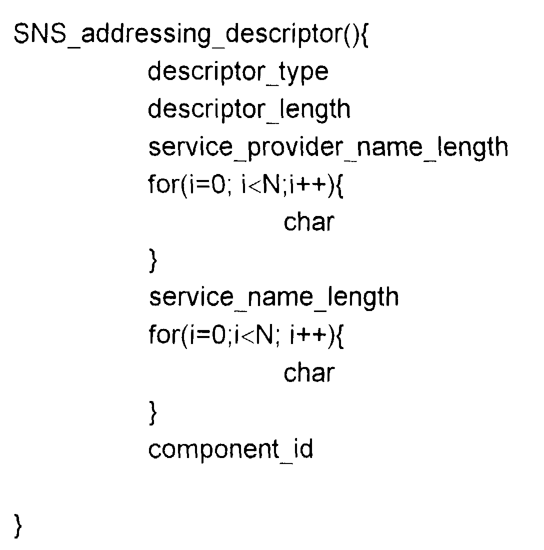

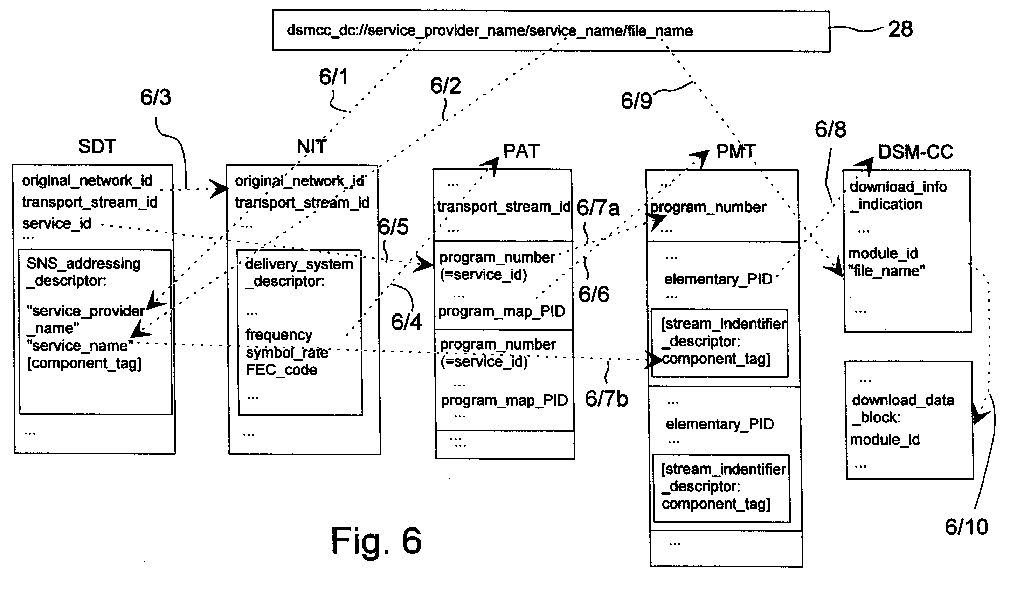

Thus in the field presented above, a space is reserved after the length information on the name of the service provider for the service_provider_ name, and after the length information on the name of the service for the service_name in text form. In Fig. 5, the arrows 5/1―5/5b illustrate the relation for retrieving identification data on the basis of the name information. The use of these relations will be described below in an example in connection with the description of Fig. 6.

For ensuring individuality of name information, the names of the service providers must be determined globally in the data transmission network. This can be conducted with the same principle as is known in the Internet data transmission network, i.e. by selecting an organization for keeping a register of names of service providers and determining new names according to the need.

The URL link is an addressing mechanism developed particularly for retrieving files in the Internet data transmission network, such as browsing a WWW page with a WWW browser. These addresses are usually given in the following form:
protocol://server_name/directory_name/.../file_name.
Using similar addressing is advantageous also in interactive services which are developed e.g. for the television and can be used e.g. with the browsing programs of the STB device.

A conventional URL address complying with the HTTP protocol has the form: http://www.uta.fi/directory_name/.../file_name, but also the form http://123.1.1.10/directory_name/.../file_name can be used; in other words, the address can be either in name form or in numerical form. As mentioned above in this description, in MPEG-2 data transmission streams complying to the DVB protocol it would be advantageous to use the URL address in the form:
dsmcc_dc://service_provider_name/service_name/file_name
instead of using the form:
DVB://original_network_id.transport_stream_id.service_id/file_name.

This more popular naming practice is shown as an example in Fig. 6, which also shows a chart on how the data transmission stream TS to be used for transmitting said service can be found out on the basis of this name information.

As an example, the DSM-CC data carousel is used for transmitting information on the service. In this case, one service indicates one data carousel which has been assigned an individual service_id, and the service can comprise several service components, such as files or modules. The service component and its directory path is identified as the module_id. The data carousel transmits in the data transmission stream a download_info_ indication message containing for each service component its name with the directory path and the corresponding module identification. Thus the download_info_indication message can be used for retrieving the module_id on the basis of the service component name, wherein the information contained in the service component can be retrieved on the basis of the module_id and received with the STB device 7.

The modules are transmitted in packets in the data transmission stream, wherein the information of one module can be divided into one or several packets depending *inter alia* on the quantity of information that can be sent in one packet and the quantity of information contained in the module, as is known. Each packet is tagged with the module_id, wherein packets belonging to the same module can be separated from the data transmission stream.

The following is a description on retrieving the data transmission stream of a service from the name-based address file 28, with reference to Fig. 6. The address file 28 is used for retrieving the service_provider_name and the service_name. These operations are indicated in Fig. 6 with arrows 6/1 and 6/2, respectively. On the basis of this name information, a search is made in service description tables SDT for the information of such a service, in whose descriptor said names are found. When the record describing said service is found, the original_network_id and the transport_stream_id are retrieved from the field of the SDT table. On the basis of the original_ network_id and the transport_stream_id, a record is retrieved in the network information table NIT in which the transport_stream_id and the original_ network_id match (arrow 6/3). Next, the physical parameters of the data transmission stream , such as carrier_frequency and symbol_rate, are retrieved from the NIT table on the basis of the parameters contained in the found record. On the basis of this information, the STB device 7 is tuned to receive the correct data transmission stream. From the PAT table of this data transmission stream, a record is retrieved in which the program_ number is identical with the service_id contained in the record of the SDT table (arrows 6/4 and 6/5). When the correct service_id is found, the program_map_PID and program_number contained in the record of the PAT table of the program is used for finding out the correct field in the PMT table (arrows 6/6 and 6/7a).

The record in the PMT table contains information on which identifications of the packets in the data transmission stream are used for service transmission, as well as on parameters related to them. If it is needed to make a reference from a descriptor in the SDT table to a certain packet identification used for transmission of said service component in the data transmission stream, this can be done by using a component_tag (arrow 6/7b). Thus at said packet identification in the PMT table, there is a descriptor containing the corresponding component_tag, wherein the packet identification can be found out. If the descriptor in the SDT table does not contain the component_tag, it is assumed that reference is made to all packet identifications in the data transmission stream which are defined in the PMT table as belonging to said service.

At this stage, the physical location i.e. the DSM-CC data carousel is already found out (arrow 6/8). At the next stage, the directory_name and the file_ name contained in the address information 28 are used to find the module_ id (arrow 6/9). Following this, those packets can be picked out from the data transmission stream in which the module_id corresponds to the module_id of the service to be searched for (arrow 6/10).

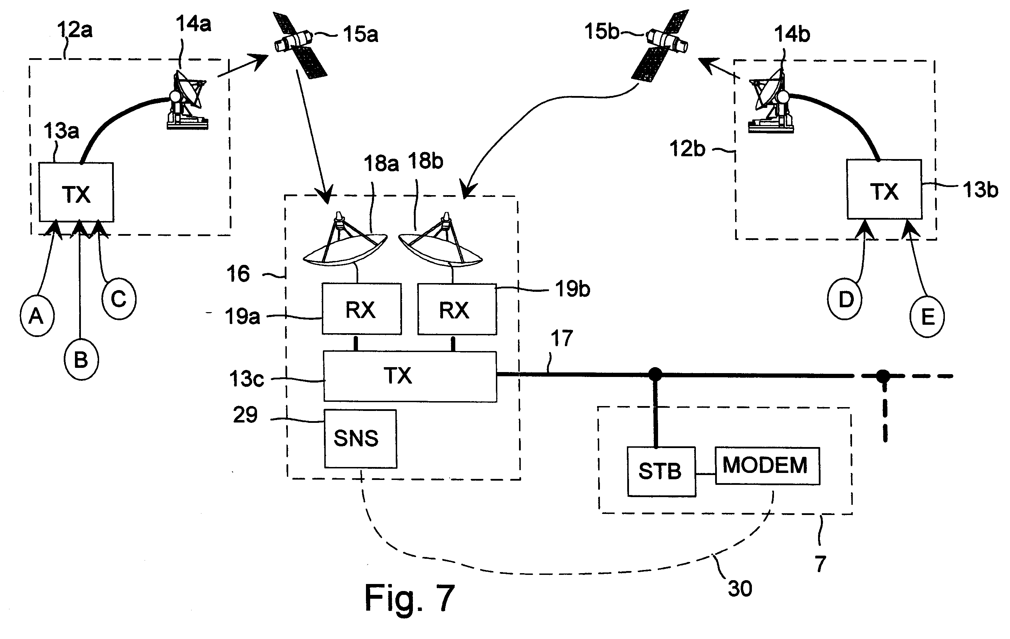

Figure 7 is a reduced chart showing a second data communication system according to the advantageous embodiment of the invention. The difference here to the system of Fig. 2a lies primarily in the fact that in this system, the information on the relation between the identification data and name information is stored in a separate data system, such as a service name server (SNS) 29 with a data transmission connection e.g. to the STB device 7 of the viewer. Thus the STB device retrieves the relation data for example by means of a modem connection 30 from the service name server or a corresponding storage.

The present invention is not limited solely to the embodiments presented above, but it can be varied within the scope of the appended claims.

## Claims

1. Method for addressing at least one service in a data communication system comprising at least one data transmission network (6, 12a, 12b, 15a, 15b, 16, 17) for transmitting information in at least one preferably MPEG data transmission stream (TS), in which method:
- one or several service_providers transmits services to one or several data transmission networks (6, 12a, 12b, 15a, 15b, 16, 17), and
- the service is assigned an identification (original_network_id, transport_stream_id, service_id),
wherein on basis of the identification (original_network_id, transport_ stream_id, service_id), it is possible to retrieve the data transmission stream (TS) to be used and the location in the data transmission stream (TS),
**characterized** in that the service is assigned an identifying name (service_provider_name, service_name) and a relation between the name information and the identification data, wherein on the basis of the name information (service_provider_name, service_name) and the relation, it is possible to retrieve the service identification.

2. Method for addressing at least one service and/or service component in a data communication system comprising at least one data transmission network (6, 12a, 12b, 15a, 15b, 16, 17) for transmitting information in at least one preferably MPEG data transmission stream (TS), in which method:
- the services comprise at least one service component,
- one or several service_providers transmits services to one or several data transmission networks (6, 12a, 12b, 15a, 15b, 16, 17),
- the service is assigned an identification (original_network_id, transport_stream_id, service_id) identifying the service, and
- the service component is assigned an identification (original_ network_id, transport_stream_id, service_id, event_id, module_id, component_tag) identifying the service component as well as the service to be used for transmitting the service component,
wherein the identification data (original_network_id, transport_stream_ id, service_id, event_id, module_id, component_tag) can serve as a basis for retrieving the data transmission stream (TS) to be used for transmitting the service and the service component, and the location in the data transmission stream (TS),
**characterized** in that the service and/or the service component are assigned identifying name information (service_provider_name, service _name) and a relation between the name information and identification data, wherein on the basis of the name information (service_provider_ name, service_name) and the relation it is possible to retrieve the identification data of the service and/or the service component.

3. Method according to claim 1 or 2, **characterized** in that the data transmission streams (TS) are data transmission streams complying to the DVB definitions.

4. Method according to claim 3, in which the identification data are transmitted in SDT table records, **characterized** in that the name information is added to the descriptor in the SDT table record, wherein a relation is formed between the name information and the identification data.

5. Method according to claim 3, in which the identification data are transmitted in EIT table records**, characterized** in that the name information is added to the descriptor in the EIT table record, wherein a relation is formed between the name information and the identification data.

6. Method according to any of claims 1 - 5, **characterized** in that the name information comprises the service_name and the service_ provider_name.

7. Method according to any of claims 1 - 6, **characterized** in that the service components are files transmitted in the DSM-CC data carousel.

8. Method according to any of claims 1 - 7, **characterized** in that the service components are transmitted in DSM-CC object carousel.

9. Method according to any of claims 1 - 8, **characterized** in that the name information are used as part of the URL address.

10. Data communication system comprising at least one data transmission network (6, 12a, 12b, 15a, 15b, 16, 17) for transmitting information on services in at least one preferably MPEG data transmission stream (TS), which system comprises equipment for transmitting services of one or several service_providers to one or several data transmission networks (6, 12a, 12b, 15a, 15b, 16, 17), and the service is assigned an identification (original_network_id, transport_stream_id, service_id),
**characterized** in that the system comprises further:
- means for assigning the service an identifying name (service_ provider_name, service_name) and
- means for forming a relation between the name information and the identification data,
wherein on the basis of the name information (service_provider_name, service_name) and the relation it is possible to retrieve the service identification.

11. Data communication system comprising at least one data transmission network (6, 12a, 12b, 15a, 15b, 16, 17) for transmitting information on services in at least one preferably MPEG data transmission stream (TS), in which system:
- the services comprise at least one service component,
- there are means for transmitting services of one or several service_ providers to one or several data transmission networks (6, 12a, 12b, 15a, 15b, 16, 17),
- the service is assigned an identification (original_network_id, transport_stream_id, service_id) identifying the service, and
- the service component is assigned an identification (original_net work_id, transport_stream_id, service_id, event_id, module_id, component_tag) identifying the service component as well as the service to be used for transmitting the service component,
wherein the identification data (original_network_id, transport_stream_ id, service_id, event_id, module_id, component_tag) can serve as a basis for retrieving the data transmission stream (TS) to be used for transmitting the service and the service component, and the location in the data transmission stream (TS),
**characterized** in that the system comprises further:
- means for assigning the service and/or the service component identifying name information (service_provider_name, service_ name) and
- means for forming a relation between the name information and identification data,
wherein on the basis of the name information (service_provider_name, service_name) and the relation it is possible to retrieve the identification data of the service and/or the service component.

12. Broadcasting device (1a, 1b, 1c, 2, 3, 4, 5) for transmitting at least one service in a data communication system comprising at least one data transmission network (6, 12a, 12b, 15a, 15b, 16, 17) for transmission of information in at least one, preferably MPEG data transmission stream (TS), in which data communication system the service is assigned an identification (original_network_id, transport_stream_id, service_id), **characterized** in that the device comprises further means (3) for transmitting the name identifying the service (service_ provider_name, service_name) and the relation between the name information and the identification data to the data transmission network.

13. Broadcasting device (1a, 1b, 1c, 2, 3, 4, 5) for transmitting at least one service and/or service component in a data communication system comprising at least one data transmission network (6, 12a, 12b, 15a, 15b, 16, 17) for transmission of information in at least one preferably MPEG data transmission stream (TS), in which data communication system:
- the service is assigned an identification (original_network_id, transport_stream_id, service_id) identifying the service, and
- the service component is assigned an identification (original_ network_id, transport_stream_id, service_id, event_id, module_id, component_tag) identifying the service component as well as the service to be used for transmitting the service component,
**characterized** in that the device comprises further means (3) for transmitting the name identifying the service (service_provider_name, service_name) and the relation between the name information and the identification data to the data transmission network.

14. Receiver (7) for receiving at least one service in a data communication system comprising at least one data transmission network (6, 12a, 12b, 15a, 15b, 16, 17) for transmission of information in at least one, preferably MPEG data transmission stream (TS), in which data communication system the service is assigned an identification (original_network_id, transport_stream_id, service_id),
**characterized** in that the receiver (7) comprises further:
- means (10) for receiving the name information (service_provider_ name, service_name) identifying the service as well as the relation between the name information and the identification data, and
- means (10) for finding out the service identification data on the basis of the relation between the name information and identification data.

15. Receiver (7) for receiving at least one service and/or service component in a data communication system comprising at least one data transmission network (6, 12a, 12b, 15a, 15b, 16, 17) for transmission of information in at least one, preferably MPEG data transmission stream (TS), in which data communication system:
- the service is assigned an identification (original_network_id, transport_stream_id, service_id) identifying the service,
- the service component is assigned an identification (original_ network_id, transport_stream_id, service_id, event_id, module_id, component_tag) identifying the service component and the service to be used for transmission of the service component,
**characterized** in that the receiver (7) comprises further:
- means (10) for receiving the name information (service_provider_ name, service_name) identifying the service and/or the service component as well as the relation between the name information and the identification data, and
- means (10) for finding out the service identification data on the basis of the relation between the name information and identification data.
